# EUROPEAN PATENT SPECIFICATION

(11) **EP 1 407 857 B1**
(45) Date of publication and mention of the grant of the patent: **22.03.2006**
(21) Application number: 02022296.4
(22) Date of filing: 07.10.2002
(51) Int. Cl.: B25B 27/06

(54) **Clamping device for detaching bearings**
Spannvorrichtung zum Abziehen von Lagerringen
Dispositif de serrage pour ôter des paliers

(43) Date of publication of application: 14.04.2004
(73) Proprietor: Chen, Yu-Lin, Wu Chi Town, Tai Chung Hsien (TW)
(72) Inventor: Chen, Yu-Lin, Wu Chi Town, Tai Chung Hsien (TW)
(74) Representative: Panten, Kirsten

(56) References cited:
- EP-A- 0 397 405
- EP-A- 1 110 677
- DE-C- 3 626 863
- DE-U- 9 114 718
- FR-A- 1 018 632
- US-A- 2 288 906
- US-B1- 6 247 217

## Description

### FIELD OF THE INVENTION

The present invention relates to a clamping device according to the preamble of independent claim 1, as is known from US 2 288 906 A, and particularly to a clamping device for detaching a bearing which can be used with a wheel puller to form a large size clamping device.

### BACKGROUND OF THE INVENTION

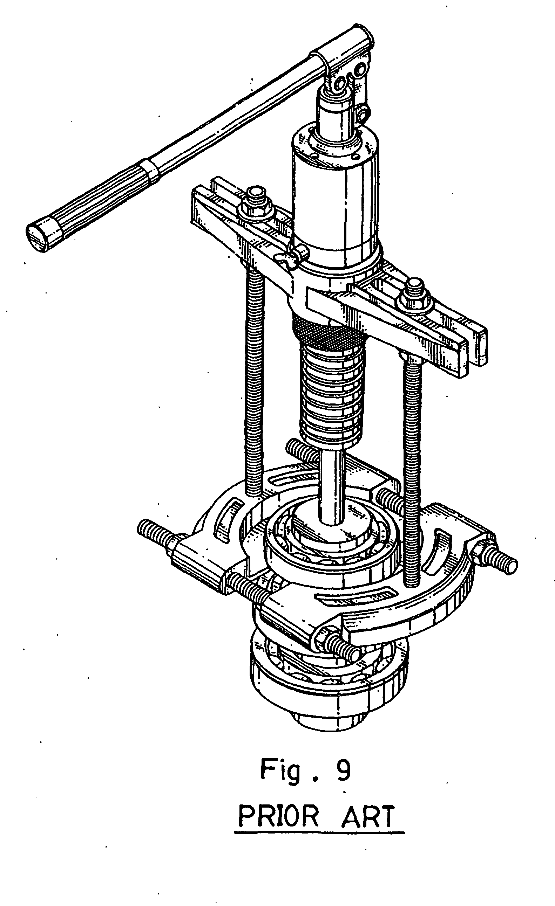

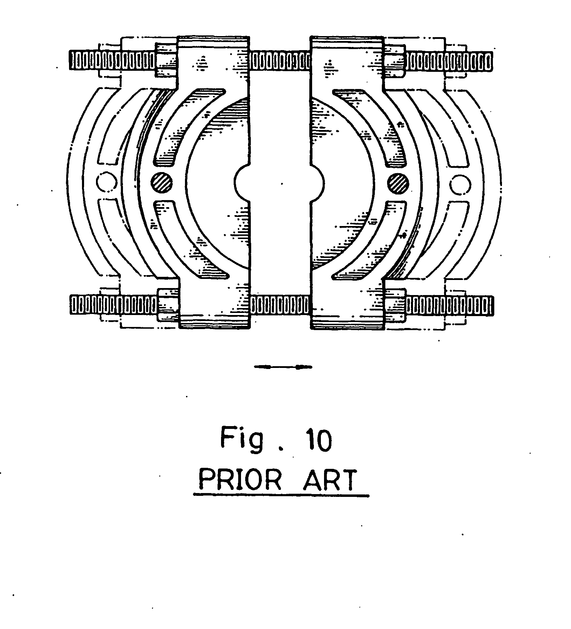

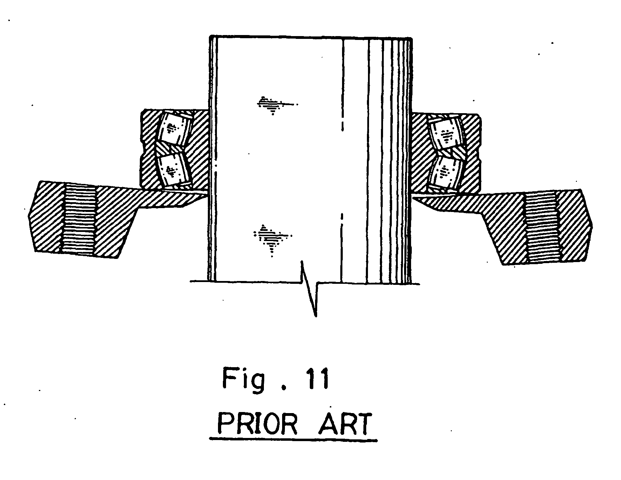

Referring to Figs. 9 and 10, it is known that a wheel puller for pulling a bearing or other round shaped objects can be used with a clamping device. However, the prior art clamping device is formed by connecting two semicircle disks by using two screw rods. Therefore, it has only a finite range for adjusting an object being clamped by the clamping device. When forces are applied to auxiliary trays, the connections of screw rods and screw holes will become loose due to vibration therebetween. It is possible to affect the pulling operation, and moreover, the screw rods are possible bent so as to induce a danger to the user and possible to destroy the object to be pulled. Referring to Fig. 11, in the prior art, the clamping device is in contact with an outer edge of the object to be pulled and is not full matched to the contact surface of the object to be pulled. Therefore, the object is possibly harmed.

Moreover, the prior art clamping device is formed by two rigid arms and a wheel puller. Therefore, when a larger force is required in operation, the arms are easy to apply forces to the clamping device so that the structure is unstable. Moreover, the size of the object to be pulled, is confined by the width of the two arms, and thus it can not be widely used in different size of objects.

### SUMMARY OF THE INVENTION

Accordingly, the primary object of the present invention is to provide a clamping device for detaching a bearing, wherein the base blocks of a clamping device is equally spaced along a round shape. Thereby, the area confined by three base blocks of the clamping device can be adjusted conveniently.

Another object of the present invention is to provide a large size clamping device for detaching a bearing, wherein the forces between the bearing to be pulled out and the clamping devices are more uniform so that the bearing will not be harmed.

To achieve above objects, the present invention provides a clamping device for detaching a bearing having three cambered base blocks according to claim 1. An inner edge of each base block is formed with a thinner top cambered surface. Each side of the base blocks has a penetrating connecting hole. Three connecting rods are used to connect the three base blocks by each connecting rod passing through the connecting holes of two respective base blocks. Thereby, an area confined by the base blocks is adjusted by adjusting the connections of the base blocks and the connecting rods. Thus the clamping device is suitable for bearings of different sizes. Further the backside of the clamping device has an ejecting cambered edge for resisting against the inner radius of a bearing. Moreover, the forces between the bearing to be pulled out and the clamping devices are more uniform so that the bearing will not be harmed. Such a clamping device can be used in a large size clamping device as per claim 2.

The various objects and advantages of the present invention will be more readily understood from the following detailed description when read in conj unction with the appended drawing.

### BRIEF DESCRIPTION OF THE DRAWINGS

Fig. 1 is a schematic perspective view of the present invention.
Fig. 2 is an exploded perspective view of the present invention.
Fig. 3 is a schematic view showing the adjustment of area of the clamping device in the present invention.
Fig. 4 shows one embodiment of the present invention.
Fig. 5 is a schematic cross sectional view showing one application of the present invention.
Fig. 6 shows another application of the present invention.
Fig. 7 is a schematic view showing that the present invention is utilized with a wheel puller.
Fig. 8 is another schematic view showing that the present invention is utilized with a wheel puller.
Fig. 9 shows a schematic perspective view of a prior art structure.
Fig. 10 is a schematic view showing the area adjustment in the prior art structure.
Fig. 11 is a schematic cross sectional view showing one application of the prior art.

### DETAILED DESCRIPTION OF THE PREFERRED EMBODIMENTS

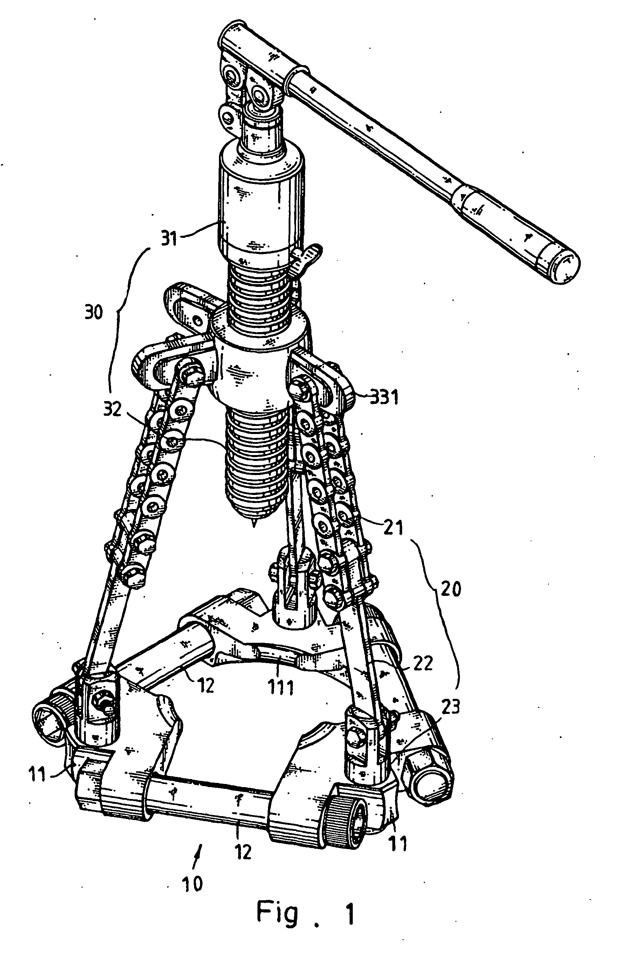

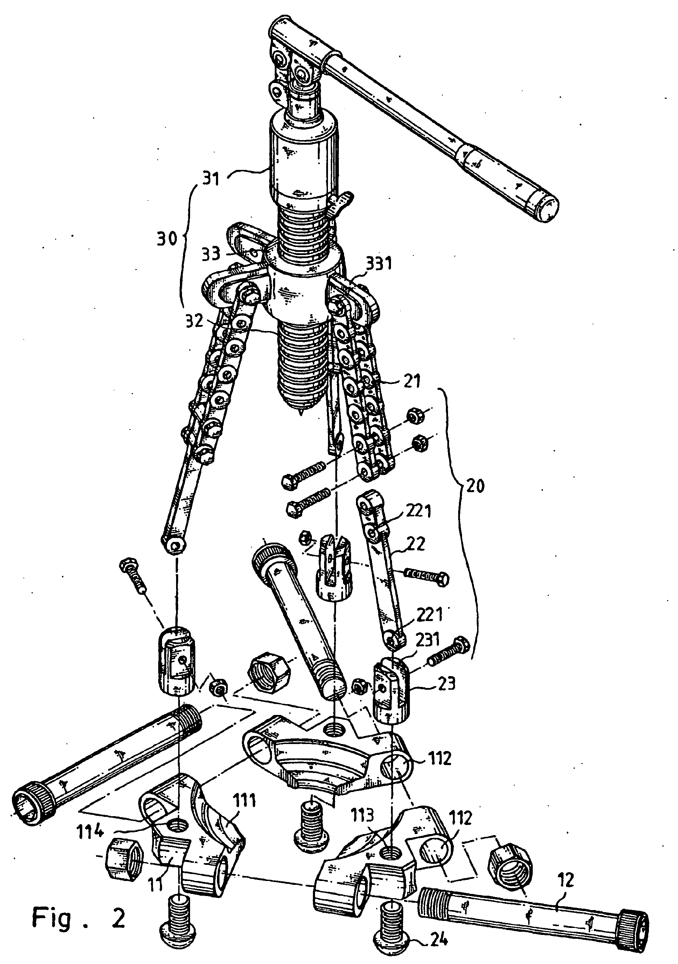

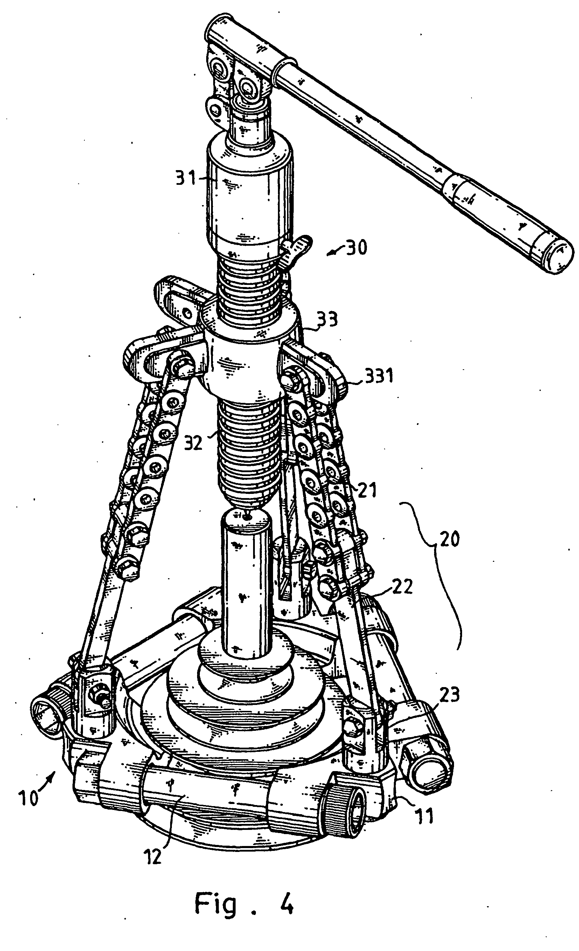

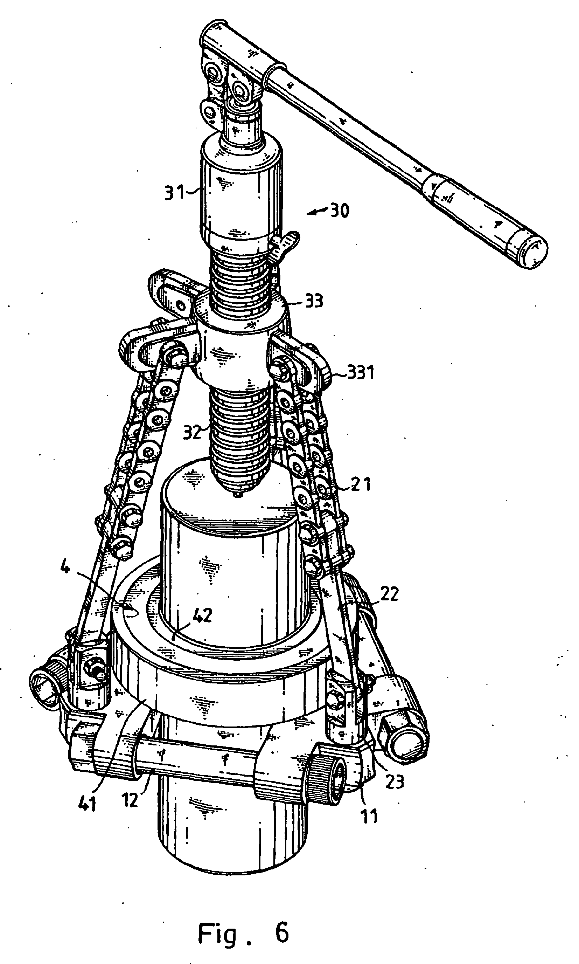

Referring to Figs. 1 to 8, the large size clamping device for detaching a bearing of the present invention is illustrated. However, the illustrated embodiment is just one example for realizing the present invention, while the present invention can be performed by other examples which are within the scope and spirit of the present invention.

With reference to Figs. 1 to 6, the large size clamping device for detaching a bearing of the present invention is illustrated. The large size clamping device for detaching a bearing comprises a clamping device 10. The large size clamping device also comprises a plurality of multi-sectional arms 20 and a wheel puller 30.

The wheel puller 30 is formed by an oil pressure driver 31, a main shaft 32, and an adjusting threaded block 33. The adjusting threaded block 33 spaced with an equal space has three ears 331 along the periphery of the adjusting threaded block 33. Thereby, multi-sectional arms 20 are pivotally installed in the ears 331. After the wheel puller 30 is assembled with the clamping device 10 for pulling an object. Since the wheel puller 30 is known in the prior art, the details will not be further described.

Each of the multi-sectional arms 20 is formed by pivotally connecting a porous pull plate 21, a pivotal rod 22, and a connecting block 23. The porous pull plate 21 is a flexible chain and has holes which are spaced equally. One end thereof is pivotally installed to an ear 331 of the adjusting threaded block 33, and another end thereof is pivotally connected to the pivotal rod 22. The two ends of the pivotal rod 22 are formed with respective pivotal holes 221. One pivotal hole is connected to the connecting block 23. The connecting block 23 is a round cylinder and has one end being formed as a concave connecting portion 231 for being engaged with a respective end of the pivotal rod 22. Another end of the connecting block 23 is formed with a screw hole (not shown). A screw rod passes through the screw hole so as to be firmly secured to the clamping device 10.

The clamping device 10 is formed by three base blocks 11 and three connecting rods 12. Each base block 11 has a cambered shape and an inner edge thereof is concave to form as a thin top cambered surface 111. Two sides of the base block 11 have respective penetrating connecting holes 112. The connecting rod 12 exactly passes through the connecting hole 112. A connecting rod 12 passes through the respective connecting holes 112 of two base blocks 11 and then are locked thereto. The middle section of the connecting rod 12 has no threads so that it is engaged with the connecting hole 112 accurately. Thereby, the three base blocks 11 are assembled as a round clamping device 10. Moreover, each base block 11 is formed with an inner threaded hole 113 for being inserted by the screw rod 24 at one end of the connecting block 23.

Thereby, the clamping device 10 of the present invention has the advantages of easily adjustment of the area between the base blocks, uniform force distribution, and protecting object to be pulled out.

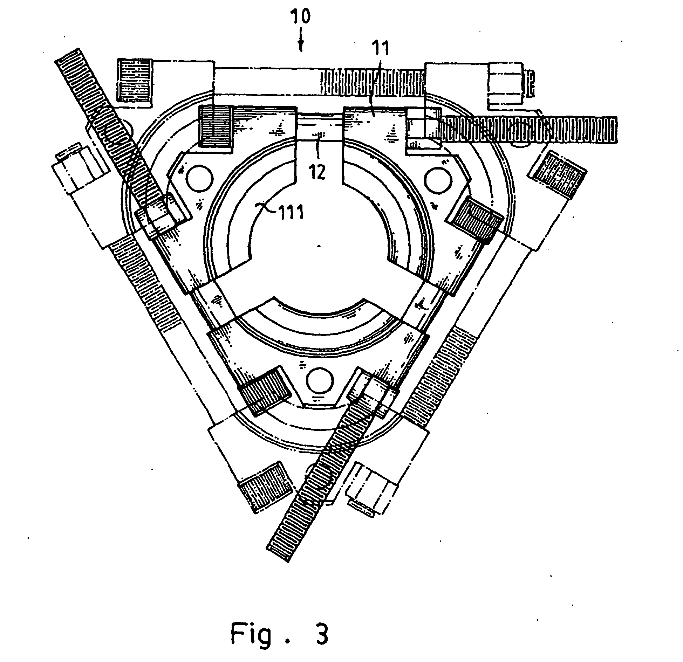

With reference to Fig. 3, the three base blocks 11 are equally distributed around a round shape and thus the base blocks 11 can decide a round shape. Therefore, when the user holds and moves a base block 11, the two base blocks 11 will expand or contract with the change of the held base block 11. As a consequence, the size of the clamping device 10 can be adjusted easily. Meanwhile, the present invention can uniformly distribute the force between the clamping device 10 and an object to be pulled out.

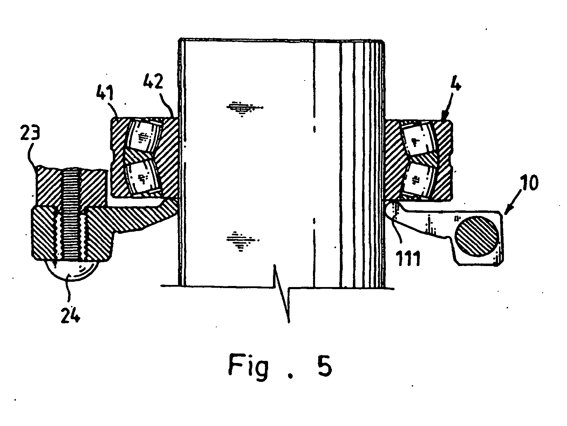

Referring to Fig. 5, when the clamping device 10 is in contact with the object to be pulled out, the top cambered surface 111 of the base block 11 resists against the inner radial surface 42 of the bearing 4 of the object to be pulled, while not resists against the outer radial surface 41 as the conventional technology. Therefore, in the pulling process, no too large twisting force is applied to the object to be pulled out. Therefore, the present invention is more usable.

Moreover, the clamping device 10 is connected to a wheel puller 30 through multi-sectional arms 20. As the wheel puller 30 is operated, since the multi-sectional arms 20 have many pivotal points, and thereby, the impacts can be properly adjusted so that the pull operation is more stable.

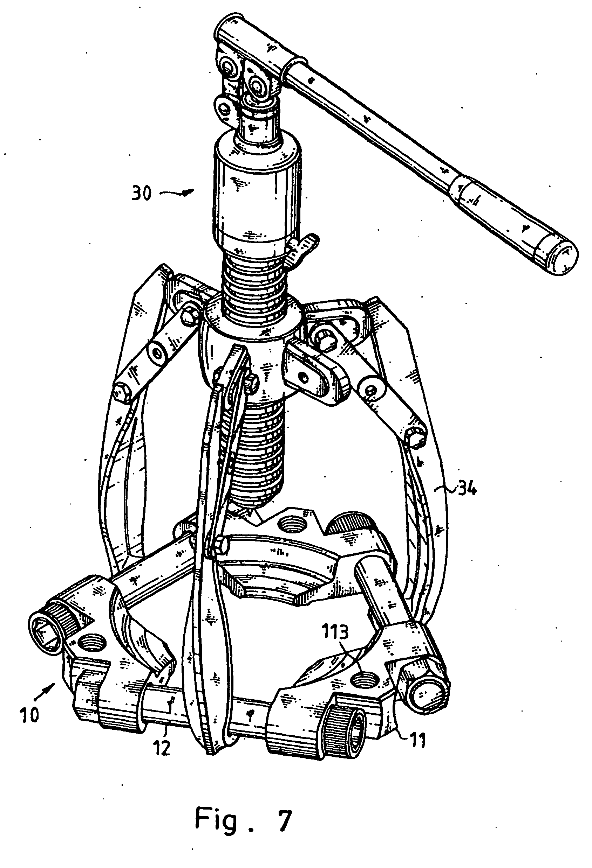

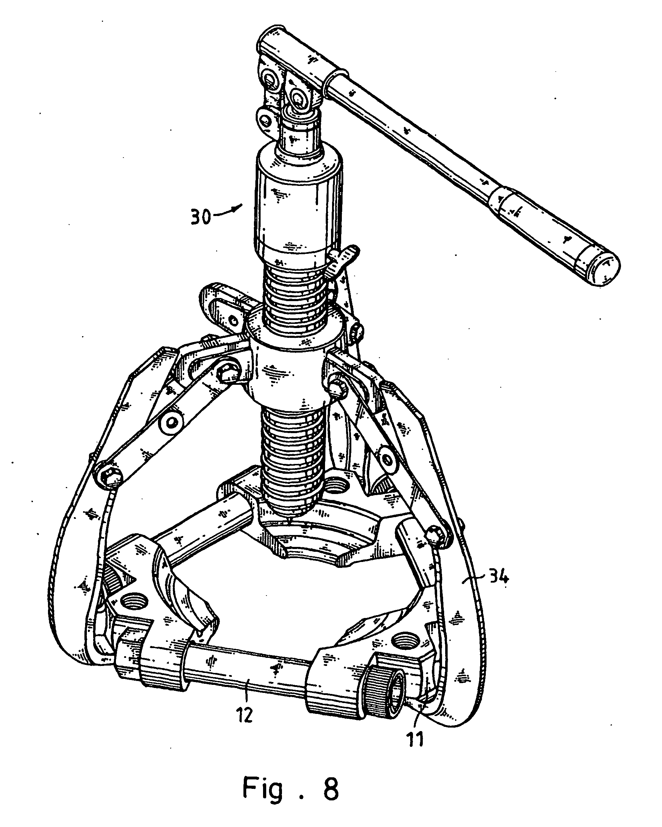

Moreover, referring to Figs. 7 and 8, in using the clamping device 10 of the present invention, a conventional three claw type wheel puller 30 can be used. The condition is illustrated in drawings. The claw 34 of the wheel puller 30 is exactly firmly secured to the three base blocks 11 of the clamping device 10, or is used at outer edges of the connecting rods 12.

The present invention are thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A clamping device for detaching a bearing, **characterized by** the clamping device (10) having three base blocks (11), an inner edge of each base block being formed with a thinner top cambered surface (111) and each side of the base block (11) having a penetrating connecting hole (112), and three connecting rods (12) connecting the three base blocks (10), each connecting rod (12) passing through the connecting holes (112) of two respective base blocks (11); such that an area confined by the base blocks (11) can be adjusted by adjusting the connections of the base blocks (11) and the connecting rods (12); the clamping device (10) thus being suitable for bearings of different sizes and for resisting against an inner radial surface of the bearing; the forces between the bearing to be pulled out and the clamping devices being more uniform, so that the bearing will not be harmed.

2. A large size clamping device for detaching a bearing;
**characterized by**
a wheel puller (30), a clamping device (10) according to claim 1 and a plurality of multi-sectional arms (20); the wheel puller (30) comprising an oil pressure driver (31), a main shaft (32), and an adjusting threaded block (33); one end of the multi-sectional arm (20) being firmly secured to the adjusting threaded block (33), and another end thereof being pivotally connected to the clamping device (10) for pulling an object.

3. The large size clamping device for detaching a bearing according to claim 2,
**characterized in that**
each of the multi-sectional arms (20) is formed by pivotally connecting a porous pull plate (21), a pivotal rod (22), and a connecting block (23); the porous pull plate (21) has holes which are equal spaced; one end of the porous pull plate is pivotally installed to an ear (331) of the adjusting threaded block (33), and another end thereof is pivotally connected to the pivotal rod (22); two ends of the pivotal rod are formed with respective pivotal holes (221); one pivotal hole is engaged with the connecting block (23); one end of the connecting block (23) is formed as a concave connecting portion (231) for being engaged with a respective end of the pivotal rod (22); and another end of the connecting block (23) is formed with a screw hole; and a screw rod passes through the screw hole so as to be firmly secured to the base block of the clamping device (10).

## Patentansprüche

1. Spannvorrichtung zum Abziehen eines Lagerrings,
**dadurch gekennzeichnet, dass** die Spannvorrichtung (10) drei Basisblocks (11) aufweist, wobei die Innenkante jedes Basisblocks als dünnere, nach oben gewölbte Fläche (111) ausgebildet ist und der Basisblock (11) auf jeder Seite ein durchgehendes Verbindungsloch (112) aufweist und drei Verbindungsstangen (12) die drei Basisblocks (10) miteinander verbinden, wobei jede Verbindungsstange (12) durch die Verbindungslöcher (112) zweier Basisblocks (11) geführt ist, so dass die Basisblocks (11) einen Bereich umgeben, der durch Einstellen der Verbindungen zwischen den Basisblöcken (11) und den Verbindungsstangen (12) angepasst werden kann, womit die Spannvorrichtung (10) für Lagerringe unterschiedlicher Größe geeignet ist und Druck auf die radial innere Fläche eines Lagerrings ausüben kann und die Kräfte zwischen dem abzuziehenden Lagerring und den Spannvorrichtungen gleichmäßiger sind, so dass der Lagerring nicht beschädigt wird.

2. Spannvorrichtung zum Abziehen eines Lagerrings,
**gekennzeichnet durch** einen Abzieher (30), eine Spannvorrichtung (10) nach Anspruch 1 und mehrere, mehrere Segmente aufweisende Arme (20), wobei der Abzieher (30) einen Öldruckantrieb (31), einen Hauptschaft (32) und einen Justierblock (33) mit Gewinde aufweist, ein Ende jedes mehrere Segmente aufweisenden Arms (20) an dem Justierblock (33) mit Gewinde befestigt ist und das andere Ende schwenkbar mit der Spannvorrichtung (10) verbunden ist, um Zug auf einen Gegenstand auszuüben.

3. Spannvorrichtung zum Abziehen eines Lagerrings nach Anspruch 2,
**dadurch gekennzeichnet, dass** jeder mehrere Segmente aufweisende Arm (20) gebildet wird, indem eine mit Löchern versehene Zugplatte (21), eine Gelenkstange (22) und ein Verbindungsblock (23) schwenkbar miteinander verbunden sind, wobei die mit Löchern versehene Zugplatte (21) gleichmäßig beabstandete Löcher aufweist, ein Ende der mit Löchern versehenen Zugplatte schwenkbar mit einer Öse (331) des Justierblock (33) mit Gewinde verbunden ist und das andere Ende schwenkbar mit der Gelenkstange (22) verbunden ist, beide Enden der Gelenkstange ein Gelenkloch (221) aufweisen, ein Gelenkloch mit dem Verbindungsblock (23) in Eingriff steht, ein Ende des Verbindungsblocks (23) als konkaver Verbindungsbereich (231) ausgebildet ist und mit einem Ende der Gelenkstange (22) in Eingriff steht, und in das andere Ende des Verbindungsblocks (23) eine Gewindebohrung eingelassen ist und eine Gewindestange durch die Gewindebohrung geführt ist, so dass sie fest mit dem Basisblock der Spannvorrichtung (10) verbunden ist.

## Revendications

1. Un dispositif de serrage pour ôter un palier, **caractérisé en ce que** le dispositif de serrage (10) comprend trois blocs de base (11), un bord intérieur de chaque bloc de base étant muni d'une surface supérieure (111) cambrée, plus mince, et chaque côté du bloc de base (11) ayant un trou de connexion par pénétration (112), et trois tiges de connexion (12) relient les trois blocs de base (10), chaque tige de connexion (12) passant par les trous de connexion (112) de deux blocs de base (11) respectifs ; de manière qu'une zone, confinée par les blocs de base (11), puisse être ajustée par l'ajustement des connexions des blocs de base (11) et des tiges de connexion (12) ; faisant que le dispositif de serrage (10) convient pour des paliers de tailles différentes et pour résister, contre une surface radiale intérieure du palier ; les forces entre le palier devant être extrait et le dispositif de serrage étant plus uniformes, de manière que le palier ne soit pas endommagé.

2. Un dispositif de serrage de grande taille pour ôter des paliers ;
**caractérisé par**
un tendeur à roue (30), un dispositif de serrage (10) selon la revendication 1 et une pluralité de bras (20) à section multiple ; le tendeur à roue (30) comprenant un organe d'entraînement par pression d'huile (31), un arbre principal (32), et un bloc d'ajustement (33) fileté ; une extrémité du bras à section multiple (20) étant fixée fermement au bloc d'ajustement (33) fileté, et une autre extrémité de celui-ci étant reliée à pivotement au dispositif de serrage (10) pour tirer un objet.

3. Le dispositif de serrage de grande taille pour ôter des paliers selon la revendication 2 ;
**caractérisé en ce que**
chacun des bras (20) à section multiple est formé par une liaison à pivotement d'une plaque de traction (21) poreuse, d'une tige pivotante (22) et d'un bloc de liaison (23) ; la plaque de traction (21) poreuse comprenant des trous implantés selon un espacement identique ; une extrémité de la plaque de traction poreuse étant installée à pivotement sur une oreille (331) du bloc d'ajustement (33) fileté, et une autre extrémité de celui-ci étant reliée à pivotement à la tige pivotante (22) ; deux extrémités de la tige pivotante sont munies de trous de pivotement (221) respectifs ; un trou de pivotement étant mis en prise avec le bloc de liaison (23) ; une extrémité du bloc de liaison (23) est formée sous forme de partie de liaison (231) concave, devant être mise en prise avec une extrémité respective de la tige pivotante (22) ; et une autre extrémité du bloc de liaison (23) est munie d'un trou taraudé ; et une tige filetée passe à travers le trou taraudé, pour être fixée fermement au bloc de base du dispositif de serrage (10).
